# EUROPEAN PATENT APPLICATION

(11) **EP 4 342 628 A1**
(43) Date of publication of application: **27.03.2024**
(21) Application number: 21940752.5
(22) Date of filing: 19.05.2021
(51) Int. Cl.: B23Q 11/00, B23Q 11/10, B01D 46/10

(54) **MACHINE TOOL**

(71) Applicant: DMG Mori Co., Ltd., Yamatokoriyama-shi, Nara 639-1160 (JP)
(72) Inventor: YAMAMOTO, Kosuke, Yamatokoriyama-shi, Nara 639-1160 (JP); KOSUGE, Masahiro, Yamatokoriyama-shi, Nara 639-1160 (JP)
(74) Representative: Grünecker Patent- und Rechtsanwälte PartG mbB
(86) International application number: PCT/JP2021/018969
(87) International publication number: WO 2022/244136

(57) **Abstract**

A machine tool includes: a body (130) including a processing area for a workpiece; an ejection part (125) configured to eject a coolant into the processing area; and a mist collector (40) configured to suck a substance included in air as a result of the coolant being ejected from the ejection part (125) into the processing area. The mist collector (40) includes a first filter (56) for removing the substance. The machine tool further includes: a drain (65) configured to discharge the substance that has passed through the first filter (56) to the body (130); and a suction mechanism (66) configured to suck the substance that has passed through the first filter (56) from the mist collector (40) into the drain (65).

## Description

### Technical Field

The present disclosure relates to a machine tool that includes a mist collector.

### Background Art

When a machine tool processes a workpiece with use of a tool, heat is generated. In order to suppress the generation of heat, the machine tool ejects a coolant toward the workpiece. At this time, the coolant vaporizes and mist is generated in the machine tool. Not only the mist but also minute chips or the like generated as a result of the workpiece being processed are included in air.

Substances included in the air, such as the mist and the minute chips, are collected by a mist collector. In this regard, Japanese Patent No. 6836683 (Patent Document 1) discloses a machine tool that includes a mist collector.

### Citation List

### Patent Document

Patent Document 1: Japanese Patent No. 6836683

### Summary of Invention

### Technical Problem

Substances included in the air and collected by the mist collector are caught by a filter included in the mist collector. However, such substances may pass through the filter included in the mist collector. Therefore, there is demand for a technology for discharging substances that have passed through the filter from the mist collector. Note that the machine tool disclosed in Patent Document 1 does not prevent substances that have passed through the filter included in the mist collector from being discharged from the mist collector.

### Solution to Problem

In an example of the present disclosure, a machine tool includes: a body including a processing area for a workpiece; an ejection part configured to eject a coolant into the processing area; and a mist collector configured to suck a substance included in air as a result of the coolant being ejected from the ejection part into the processing area. The mist collector includes a first filter for removing the substance. The machine tool further includes: a drain configured to discharge the substance that has passed through the first filter to the body; and a suction mechanism configured to suck the substance that has passed through the first filter from the mist collector into the drain.

In an example of the present disclosure, the body includes a cover body defining the processing area. One end of the drain is coupled to the mist collector. Another end of the drain is coupled to the cover body.

In an example of the present disclosure, the body includes: a cover body defining the processing area; a collection mechanism configured to collect the coolant ejected from the ejection part into the processing area; and a coolant tank configured to store the coolant collected by the collection mechanism. One end of the drain is coupled to the mist collector. Another end of the drain is coupled to the coolant tank.

In an example of the present disclosure, the mist collector includes: a fan configured to create a flow of air to carry the substance within the body from the body to the mist collector with the flow of air; and a second filter including a plurality of layers and fixed inside the mist collector. The substance sucked from the body into the mist collector passes through the first filter, the fan, and the second filter in this order. The one end of the drain is coupled to the mist collector in such a manner as to discharge the substance that has passed through the first filter to the body, before the substance reaches the fan.

In an example of the present disclosure, the mist collector includes: a fan configured to create a flow of air from the body toward the mist collector; and a second filter including a plurality of layers and fixed inside the mist collector. The substance sucked from the body into the mist collector passes through the first filter, the fan, and the second filter in this order. The one end of the drain is coupled to the mist collector in such a manner as to discharge the substance that has passed through the fan to the body, before the substance reaches the second filter.

In an example of the present disclosure, the first filter is a rotary filter configured to be rotatable. The machine tool further includes: a washing mechanism configured to wash the rotary filter; and a control unit configured to control the machine tool. The control unit executes suction processing performed by the suction mechanism while executing washing processing of washing the rotary filter by the washing mechanism.

The above-described object, other objects, features, aspects, and advantages of the present invention will be clarified by the following detailed description of the present invention to be understood in connection with the attached drawings.

### Brief Description of the Drawings

FIG. 1 is a diagram showing an appearance of a machine tool.
FIG. 2 is a diagram showing the inside of the machine tool.
FIG. 3 is a diagram showing the inside of the machine tool as viewed from a direction different from the direction of the view shown in FIG. 2.
FIG. 4 is a diagram showing a configuration example of drive mechanisms of the machine tool.
FIG. 5 is a diagram showing an example of a coolant circulation mechanism.
FIG. 6 is a diagram showing a cross section of a mist collector shown in FIG. 1.
FIG. 7 is a diagram showing an example of the manner of coupling a drain between the mist collector and a body.
FIG. 8 is a diagram showing another example of the manner of coupling the drain between the mist collector and the body.
FIG. 9 is a diagram showing another example of the manner of coupling the drain between the mist collector and the body.
FIG. 10 is a diagram showing another example of the manner of coupling the drain between the mist collector and the body.
FIG. 11 is a diagram showing a cross section of the mist collector shown in FIG. 1.
FIG. 12 is a flowchart showing a part of processing executed by a control unit of the machine tool.

### Description of Embodiments

The following describes an embodiment according to the present invention with reference to the drawings. In the following description, the same components and the same constitutional elements are denoted by the same reference numeral. Those components and constitutional elements have the same name and the same function. Accordingly, detailed descriptions of those components and constitutional elements are not repeated. The following embodiment and variations can be selectively combined as appropriate.

### A. Appearance of Machine Tool 100

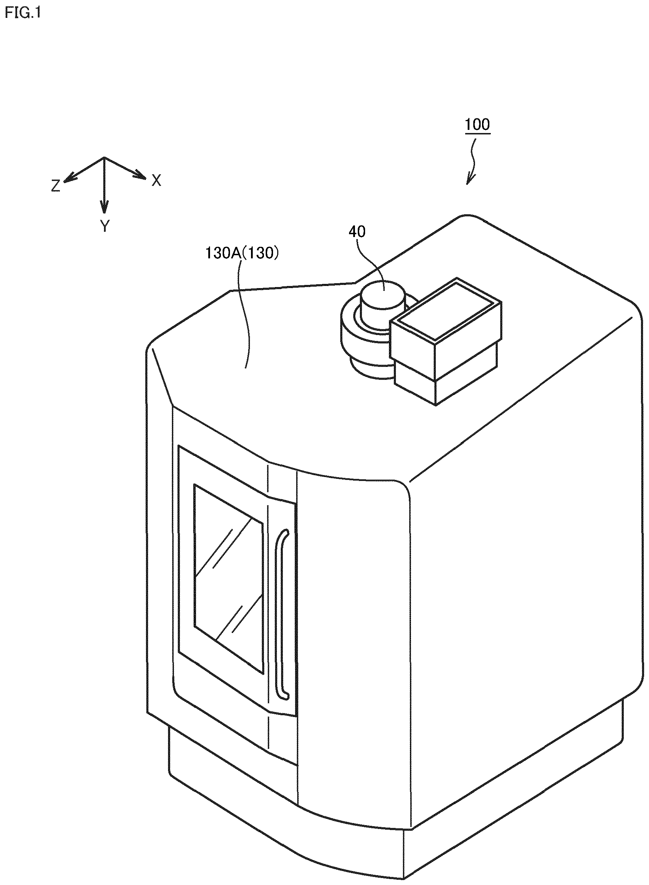

The following describes a machine tool 100 according to an embodiment with reference to FIG. 1. FIG. 1 is a diagram showing an appearance of the machine tool 100.

The "machine tool" as used in the present specification is a concept that encompasses various apparatuses having functions for processing a workpiece. In the present specification, a horizontal machining center is described as an example of the machine tool 100, but the machine tool 100 is not limited to this example. For example, the machine tool 100 may also be a vertical machining center. Alternatively, the machine tool 100 may be a lathe, an additive processing machine, or any other cutting machine or griding machine. Furthermore, the machine tool 100 may be a combined machine obtained by combining these machines.

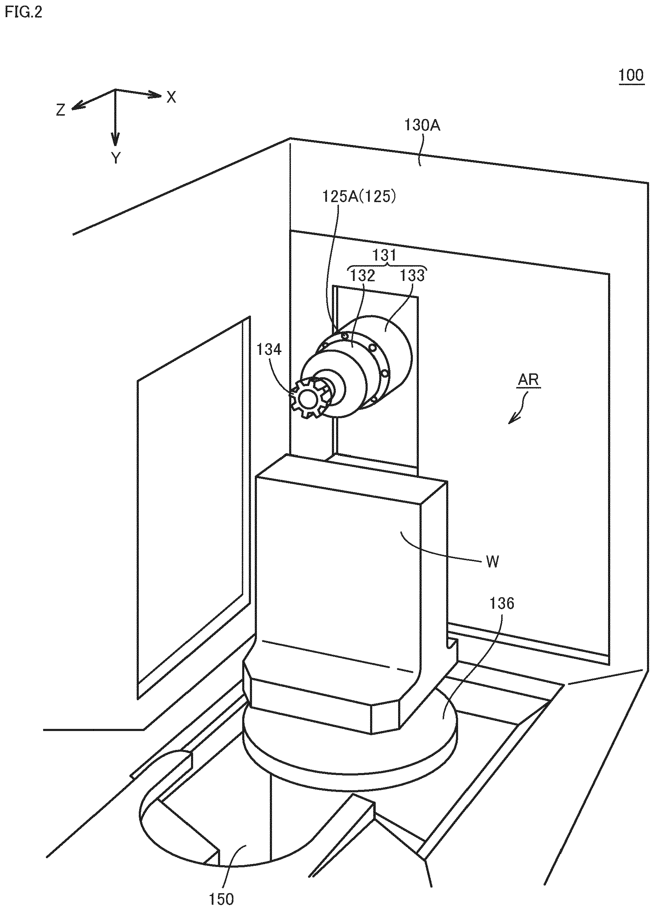

As shown in FIG. 1, the machine tool 100 includes a mist collector 40 and a body 130 that has a processing function. The body 130 includes a cover body 130A as a part of the body 130. The cover body 130A is also called a "splash guard", forms the appearance of the machine tool 100, and defines a processing area AR (see FIG. 2) for a workpiece W.

The mist collector 40 is coupled to a ceiling portion of the cover body 130A in such a manner as to be capable of collecting substances (hereinafter also referred to as "minute substances") included in air within the body 130. With this configuration, the mist collector 40 prevents minute substances inside the machine tool from leaking to the outside of the machine tool 100. Examples of minute substances collected by the mist collector 40 include mist generated as a result of a coolant being ejected, minute chips generated as a result of a workpiece being processed, and other foreign matters floating in the air.

Note that the position at which the mist collector 40 is installed is not limited to the ceiling of the machine tool 100. For example, the mist collector 40 may be installed on a side surface of the machine tool 100. Alternatively, the mist collector 40 may be provided at a site different from the machine tool 100. In this case, the mist collector 40 is connected to the machine tool 100 by a pipe or the like.

### B. Internal Configuration of Machine Tool 100

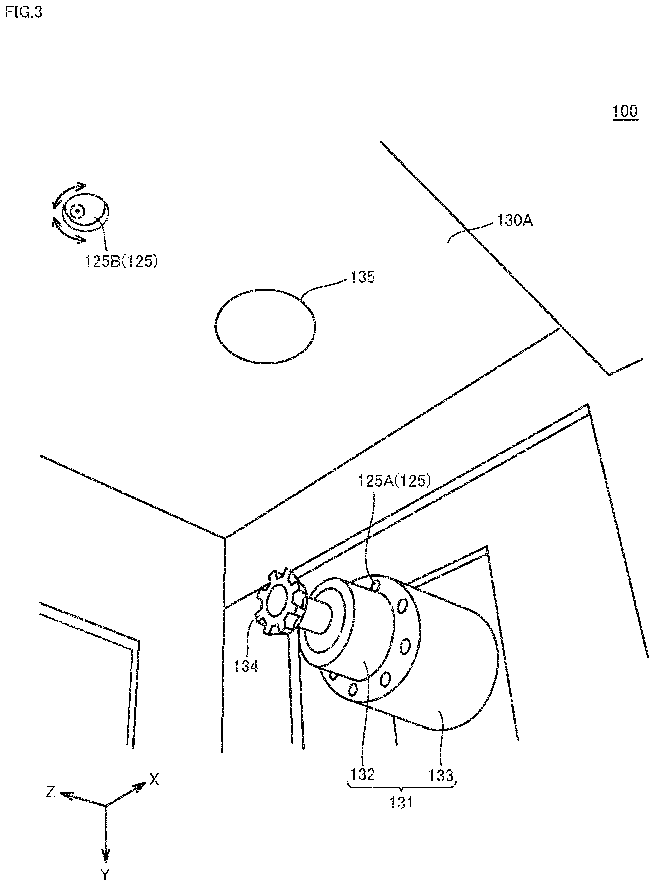

Next, the following describes an internal configuration of the machine tool 100 with reference to FIGS. 2 and 3. FIG. 2 is a diagram showing the inside of the machine tool 100. FIG. 3 is a diagram showing the inside of the machine tool 100 as viewed from a direction different from the direction of the view shown in FIG. 2.

As shown in FIGS. 2 and 3, the machine tool 100 includes an ejection part 125 from which a coolant is ejected, a spindle head 131, a tool 134, a table 136, and a collection mechanism 150 therein. The spindle head 131 includes a spindle 132 and a housing 133.

Hereinafter, the axial direction of the spindle 132 will also be referred to as a "Z-axis direction", for the sake of convenience of description. The gravitational direction will also be referred to as a "Y-axis direction". A direction orthogonal to both the Y-axis direction and the Z-axis direction will be referred to as an "X-axis direction".

The ceiling of the cover body 130A includes an opening 135. The above-described mist collector 40 is disposed so as to cover the opening 135. With this configuration, the mist collector 40 collects minute substances from the processing area AR via the opening 135.

The ejection part 125 is provided inside the machine tool 100 and ejects a coolant to discharge chips generated through processing of the workpiece W to the collection mechanism 150. The ejection part 125 is constituted by one or more ejection mechanisms. FIGS. 2 and 3 show ejection mechanisms 125A and 125B as an example of the ejection part 125.

The ejection mechanism 125A is provided in the spindle head 131. The ejection mechanism 125A may be of a side through type that ejects the coolant from an end face of the spindle 132 through the housing 133 of the spindle head 131 or a center through type that ejects the coolant from an edge of a blade of the tool held by the spindle head 131 through the spindle center of the spindle head 131. The ejection mechanism 125A mainly ejects the coolant toward a processing point on the workpiece to remove chips attaching to the spindle 132 and the tool 134 and suppress generation of heat at the processing point on the workpiece. The ejection mechanism 125A is configured to be capable of being driven in a rotation direction about the X axis (i.e., in an A-axis direction) and in a rotation direction about the Z axis (i.e., in a C-axis direction). With this configuration, the ejection mechanism 125A changes an ejecting direction of the coolant in the A-axis direction and the C-axis direction.

The ejection mechanism 125B is provided above the ejection mechanism 125A. The ejection mechanism 125B is attached to the ceiling portion of the cover body 130A, for example. The ejection mechanism 125B mainly ejects the coolant from the cover body 130A throughout the processing area AR. As a result, chips generated through processing of the workpiece W are discharged from the processing area AR to the collection mechanism 150.

The spindle 132 is provided in the housing 133. A tool for processing the workpiece W, which is a processing target, is attached to the spindle 132. In the example shown in FIGS. 2 and 3, the tool 134 used for milling of the workpiece W is attached to the spindle 132.

The collection mechanism 150 for chips is a mechanism for discharging chips generated through processing of the workpiece W to the outside of the processing area AR.

### C. Drive Mechanism of Machine Tool 100

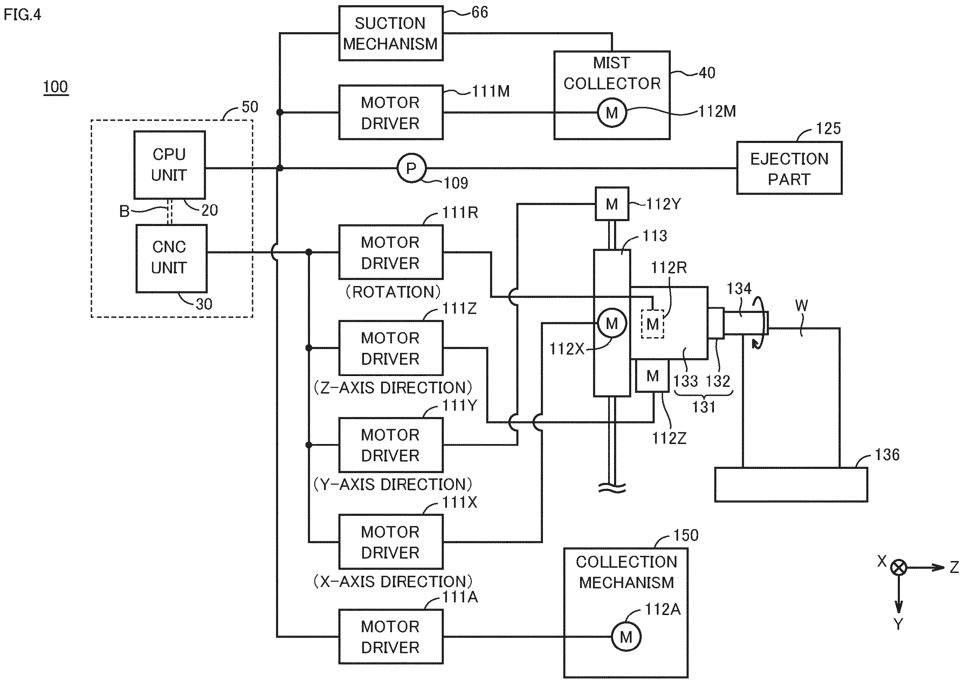

Next, the following describes various drive mechanisms of the machine tool 100 with reference to FIG. 4. FIG. 4 is a diagram showing a configuration example of drive mechanisms of the machine tool 100.

As shown in FIG. 4, the machine tool 100 includes a control unit 50, a suction mechanism 66, a pump 109, motor drivers 111A, 111R, and 111X to 111Z, motors 112A, 112R, and 112X to 112Z, a movable body 113, the ejection mechanisms 125A and 125B, the spindle head 131, the tool 134, and the table 136.

The term "control unit 50" as used in the present specification means a device that controls the machine tool 100. There is no limitation to the device configuration of the control unit 50. The control unit 50 may be constituted by a single control unit or a plurality of control units. In the example shown in FIG. 4, the control unit 50 is constituted by a CPU unit 20 that is a PLC (Programmable Logic Controller) and a CNC (Computer Numerical Control) unit 30. The CPU unit 20 and the CNC unit 30 communicate with each other via a communication path B (e.g., a field bus or a LAN cable).

The CPU unit 20 controls various units included in the machine tool 100 in accordance with a PLC program designed in advance. The PLC program is written by a ladder program, for example.

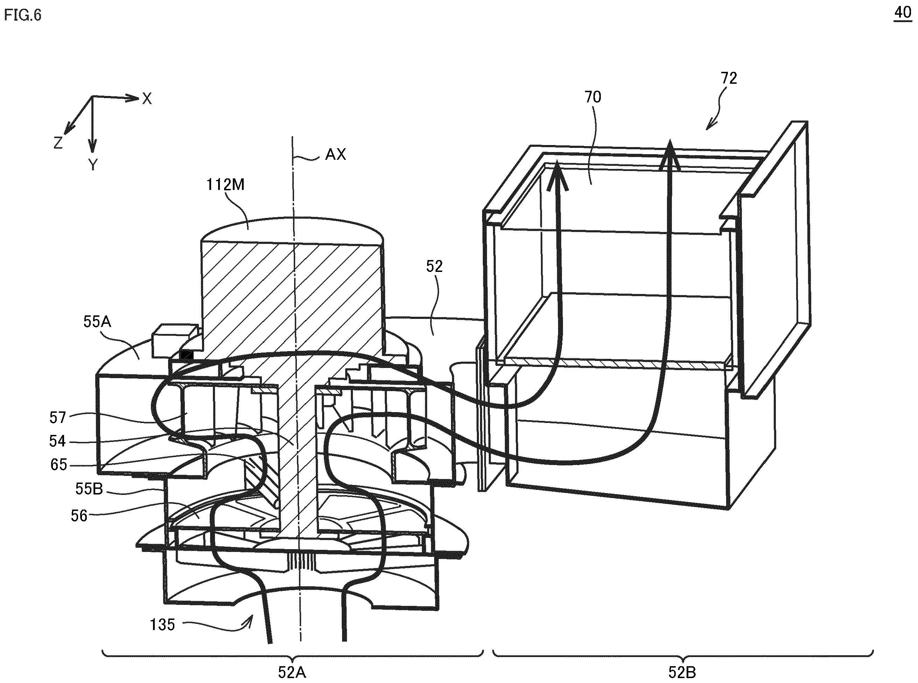

For example, the CPU unit 20 controls the suction mechanism 66 in accordance with the PLC program. The suction mechanism 66 is connected to a drain 65 (see FIG. 6) of the mist collector 40. The suction mechanism 66 sucks minute substances from the mist collector 40 via the drain 65 by pumping air into the drain 65. The minute substances sucked by the suction mechanism 66 are returned into the body 130 of the machine tool 100. The CPU unit 20 switches suction by the suction mechanism 66 ON and OFF and controls a suction amount of the suction mechanism 66 in accordance with the PLC program, for example.

In another example, the CPU unit 20 controls a motor driver 111M included in the mist collector 40 in accordance with the PLC program. The motor driver 111M receives input of a target rotational speed of a motor 112M from the CPU unit 20, and controls the motor 112M. Thus, driving of the mist collector 40 is switched ON and OFF, and a mist suction amount of the mist collector 40 is controlled, for example. The motor 112M may be an AC motor, a stepping motor, a servomotor, or any other type of motor.

In another example, the CPU unit 20 controls the pump 109 in accordance with the PLC program to control ejection of the coolant from the ejection part 125. Thus, ejection of the coolant is switched ON and OFF, and a coolant ejection amount is controlled, for example.

In another example, the CPU unit 20 controls the motor driver 111A in accordance with the PLC program. The motor driver 111A receives input of a target rotational speed of the motor 112A from the CPU unit 20, and controls the motor 112A. Thus, driving of the collection mechanism 150 is switched ON and OFF, and a chip conveying speed of the collection mechanism 150 is controlled, for example. The motor 112A may be an AC motor, a stepping motor, a servomotor, or any other type of motor.

The CNC unit 30 starts to execute a processing program designed in advance upon receiving a processing start instruction from the CPU unit 20. The processing program is written by a NC (Numerical Control) program, for example. The CNC unit 30 controls the motor drivers 111R and 111X to 111Z in accordance with the processing program to process the workpiece W fixed on the table 136.

The motor driver 111R successively receives input of a target rotational speed from the CNC unit 30, and controls the motor 112R. The motor 112R rotates the spindle 132 about the Z axis. The motor 112R may be an AC motor, a stepping motor, a servomotor, or any other type of motor.

In the case where the motor 112R is a servomotor, the motor driver 111R calculates an actual rotational speed of the motor 112R based on a feedback signal received from an encoder (not shown) for detecting a rotation angle of the motor 112R. When the calculated actual rotational speed is lower than the target rotational speed, the motor driver 111R increases the rotational speed of the motor 112R, and when the calculated actual rotational speed is higher than the target rotational speed, the motor driver 111R reduces the rotational speed of the motor 112R. As described above, the motor driver 111R makes the rotational speed of the motor 112R closer to the target rotational speed by successively receiving feedback about the rotational speed of the motor 112R.

The motor driver 111X successively receives input of a target position from the CNC unit 30, and controls the motor 112X. The motor 112X drives the movable body 113, to which the spindle head 131 is attached, via a ball screw (not shown) to move the spindle 132 to a desired position in the X-axis direction. The method for controlling the motor 112X by the motor driver 111X is similar to that described above about the motor driver 111R, and a redundant description thereof is omitted. The motor 112X may be an AC motor, a stepping motor, a servomotor, or any other type of motor.

The motor driver 111Y successively receives input of a target position from the CNC unit 30, and controls the motor 112Y The motor 112Y drives the movable body 113, to which the spindle head 131 is attached, via a ball screw (not shown) to move the spindle 132 to a desired position in the Y-axis direction. The method for controlling the motor 112Y by the motor driver 111Y is similar to that described above about the motor driver 111R, and a redundant description thereof is omitted. The motor 112Y may be an AC motor, a stepping motor, a servomotor, or any other type of motor.

The motor driver 111Z successively receives input of a target position from the CNC unit 30, and controls the motor 112Z. The motor 112Z drives the movable body 113, to which the spindle head 131 is attached, via a ball screw (not shown) to move the spindle 132 to a desired position in the Z-axis direction. The method for controlling the motor 112Z by the motor driver 111Z is similar to that described above about the motor driver 111R, and a redundant description thereof is omitted. The motor 112Z may be an AC motor, a stepping motor, a servomotor, or any other type of motor.

### D. Coolant Circulation Mechanism

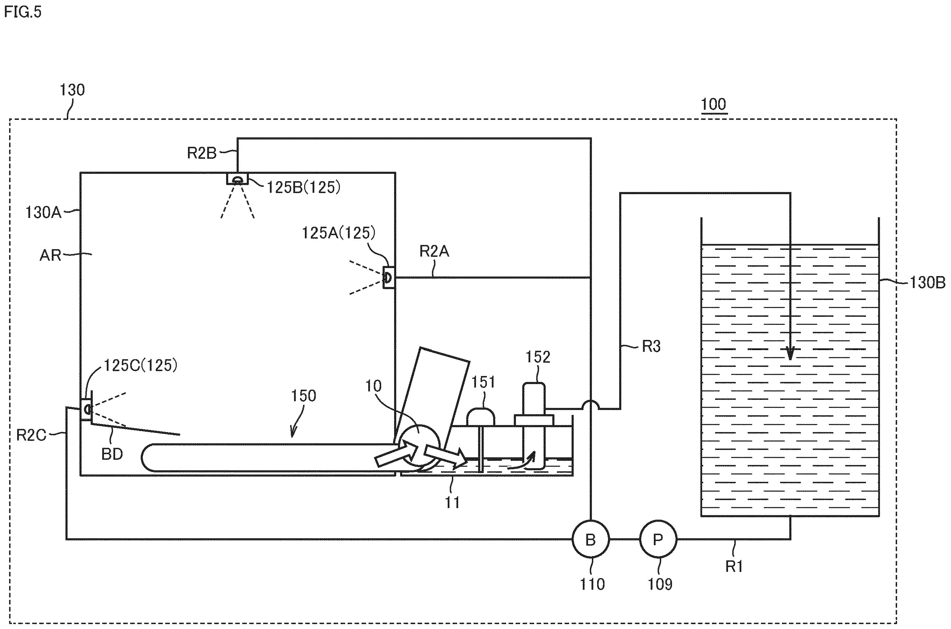

Next, the following describes a coolant circulation mechanism with reference to FIG. 5. FIG. 5 is a diagram showing an example of the coolant circulation mechanism.

The machine tool 100 includes the body 130 having the processing function. The body 130 includes at least the cover body 130A. The body 130 may further include a coolant tank 130B.

The coolant ejected from the ejection part 125 circulates within the machine tool 100. The machine tool 100 includes, as components of the coolant circulation mechanism, flow paths R1, R2A to R2C, and R3, a pump 109, a valve 110, the ejection part 125, the coolant tank 130B, the collection mechanism 150, a liquid level sensor 151, and a pump 152. The ejection part 125 includes ejection mechanisms 125Ato 125C, for example.

The coolant is stored in the coolant tank 130B. The coolant tank 130B is connected to an end of the flow path R1. The other end of the flow path R1 is connected to the flow paths R2A to R2C.

The flow path R2A is connected to the ejection mechanism 125A. The ejection mechanism 125A ejects the coolant that has been pumped through the flow path R2A toward the spindle head 131. As a result, chips of the workpiece attaching to the spindle head 131 are discharged to the collection mechanism 150.

The flow path R2B is connected to the ejection mechanism 125B. The ejection mechanism 125B ejects the coolant that has been pumped through the flow path R2B throughout the processing area AR. As a result, chips of the workpiece in the processing area AR are discharged to the collection mechanism 150.

The flow path R2C is connected to the ejection mechanism 125C. The ejection mechanism 125C ejects the coolant that has been pumped through the flow path R2C toward a wall surface of a bed BD. As a result, chips accumulated on the bed BD are discharged to the collection mechanism 150.

When the pump 109 is driven, the pump 109 pumps the coolant stored in the coolant tank 130B through the flow path R1 into each of the flow paths R2A to R2C.

The valve 110 is provided on the flow paths R1 and R2A to R2C. The valve 110 is a control valve for controlling a flow rate of the coolant pumped from the coolant tank 130B toward the ejection mechanisms 125A to 125C. The valve 110 is controlled by the control unit 50 described above. The valve 110 may be integrated with the pump 109 or separate from the pump 109.

The collection mechanism 150 collects the coolant ejected from the ejection part 125 into the processing area AR. The collection mechanism 150 includes a filtration mechanism 10 and a coolant bath 11, for example. The filtration mechanism 10 is constituted by a filter that can catch foreign matters such as chips contained in the coolant. The coolant from which chips have been removed by the filtration mechanism 10 is discharged to the coolant bath 11.

The liquid level sensor 151 detects the height of a surface of the coolant accumulated in the coolant bath 11. The height is output to the control unit 50 described above. The control unit 50 adjusts the amount of coolant pumped by the pump 152 to make the height constant.

The pump 152 is connected to the flow path R3. The pump 152 pumps up the coolant accumulated in the coolant bath 11 and returns the coolant to the coolant tank 130B via the flow path R3. Thus, the coolant collected by the collection mechanism 150 is stored in the coolant tank 130B.

### E. Internal Structure of Mist Collector 40

Next, the following describes an internal structure of the mist collector 40 with reference to FIG. 6. FIG. 6 is a diagram showing a cross section of the mist collector 40 shown in FIG. 1.

The mist collector 40 includes a housing 52. The housing 52 includes the opening 135 that serves as an air intake port. The mist collector 40 introduces minute substances included in air within the processing area AR via the opening 135 into the housing 52.

The inside of the housing 52 is divided into a first filtering area 52A and a second filtering area 52B. Minute substances collected from the processing area AR pass through the first filtering area 52A and the second filtering area 52B in this order.

The first filtering area 52A is constituted by a tubular portion 55A and a tubular portion 55B. The tubular portion 55A is coupled to the tubular portion 55B. The tubular portion 55A and the tubular portion 55B are coaxially arranged with an axis AX as a central axis.

Hereinafter, a direction orthogonal to the axis AX will also be referred to as a "radial direction". Typically, an inner radius of the tubular portion 55A in the radial direction is longer than an inner radius of the tubular portion 55B in the radial direction.

A shaft 54 is housed in the first filtering area 52A. A rotary filter 56 and a fan 57 are fixed to the shaft 54. The shaft 54 is connected to the above-described motor 112M and configured to be rotatable about the axis AX. With this configuration, the shaft 54 functions as a rotation shaft and rotates the rotary filter 56 and the fan 57 together.

The rotary filter 56 is housed in the tubular portion 55A of the housing 52. The radial direction of the rotary filter 56 is orthogonal to an inner surface of the tubular portion 55A. The term "orthogonal" as used here can encompass not only 90° but also substantially 90°. That is, an angle formed between the radial direction of the rotary filter 56 and the inner surface of the tubular portion 55A may be 90° or substantially 90° (for example, 85° or more and 95° or less).

The fan 57 is housed in the tubular portion 55B of the housing 52. The fan 57 functions as a moving blade for creating a flow of air passing through the rotary filter 56. That is, minute substances in the processing area AR are directed to the rotary filter 56 as a result of the fan 57 rotating. The rotary filter 56 blows off the minute substances colliding with the rotary filter 56 in the radial direction with centrifugal force. Thus, the minute substances are caught by the rotary filter 56. The minute substances caught by the rotary filter 56 are returned into the above-described cover body 130A or the above-described coolant tank 130B.

A multilayer filter 70 is housed in the second filtering area 52B. Unlike the rotary filter 56, the multilayer filter 70 is stationary. The multilayer filter 70 catches minute substances that have passed through the rotary filter 56.

As described above, minute substances sucked from the body 130 into the mist collector 40 pass through the rotary filter 56, the fan 57, and the multilayer filter 70 in this order. Accordingly, only air is discharged from an exhaust port 72.

### F. Drain 65 and Suction Mechanism 66

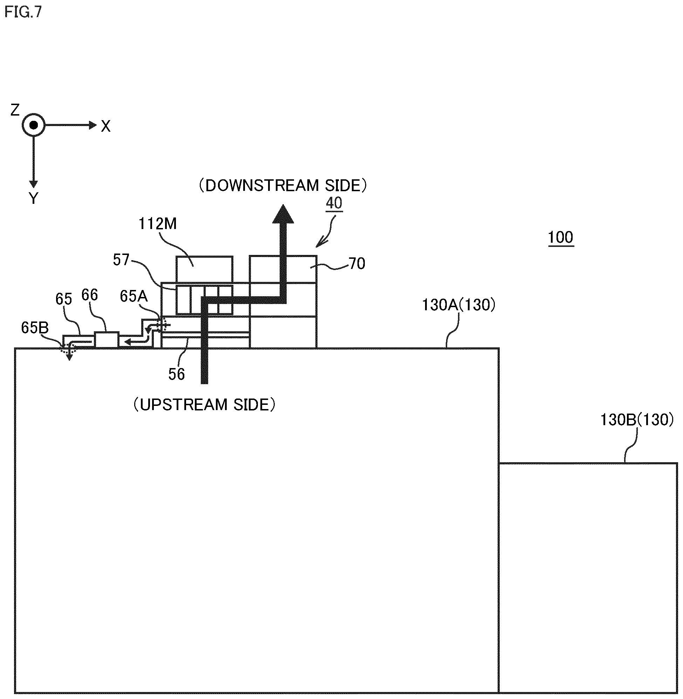

Next, the following describes the above-described drain 65 and the above-described suction mechanism 66 with reference to FIG. 7. FIG. 7 is a diagram showing an example of the manner of coupling the drain 65 between the mist collector 40 and the body 130.

The drain 65 is for connecting the mist collector 40 to the body 130 and returning minute substances from the mist collector 40 to the body 130. For example, an end of the drain 65 is coupled to a position that is downstream of the rotary filter 56 in the direction of a flow of air passing through the rotary filter 56. The other end of the drain 65 is coupled to the body 130.

Hereinafter, the end of the drain 65 connected to the mist collector 40 will also be referred to as an "air inlet 65A of the drain 65", for the sake of convenience of description. Also, the other end of the drain 65 connected to the body 130 will also be referred to as an "air outlet 65B of the drain 65".

The suction mechanism 66 is provided at an intermediate position on the drain 65. The suction mechanism 66 creates a flow of air from the air inlet 65A of the drain 65 toward the air outlet 65B of the drain 65. The flow of air is created as a result of the suction mechanism 66 pumping air toward the air outlet 65B of the drain 65, for example.

As described above, the suction mechanism 66 functions as a vacuum pump, and sucks minute substances that have passed through the rotary filter 56 (a first filter) from the mist collector 40 into the drain 65. Therefore, even when minute substances have passed through the rotary filter 56, the minute substances are discharged via the drain 65 to the outside of the mist collector 40. Examples of minute substances discharged from the mist collector 40 via the drain 65 include mist generated as a result of the coolant being ejected, the mist that has liquefied and turned into the coolant, minute chips generated as a result of a workpiece being processed, and other foreign matters.

Note that the drain 65 can be coupled to suitable positions between the mist collector 40 and the body 130.

For example, the air inlet 65A of the drain 65 is coupled to the mist collector 40. Also, the air outlet 65B of the drain 65 is coupled to the cover body 130A. With this configuration, minute substances sucked into the drain 65 are returned into the cover body 130A.

Preferably, the air inlet 65A of the drain 65 is coupled to the mist collector 40 in such a manner as to discharge minute substances that have passed through the rotary filter 56 to the body 130, before the minute substances reach the fan 57. In other words, the air inlet 65A of the drain 65 is coupled to a position that is downstream of the rotary filter 56 in the direction of a flow of air passing through the rotary filter 56 and upstream of the fan 57 in the direction of a flow of air passing through the fan 57. With this configuration, minute substances that have passed through the rotary filter 56 are sucked into the drain 65 before reaching the fan 57.

### G. First Variation of Drain 65

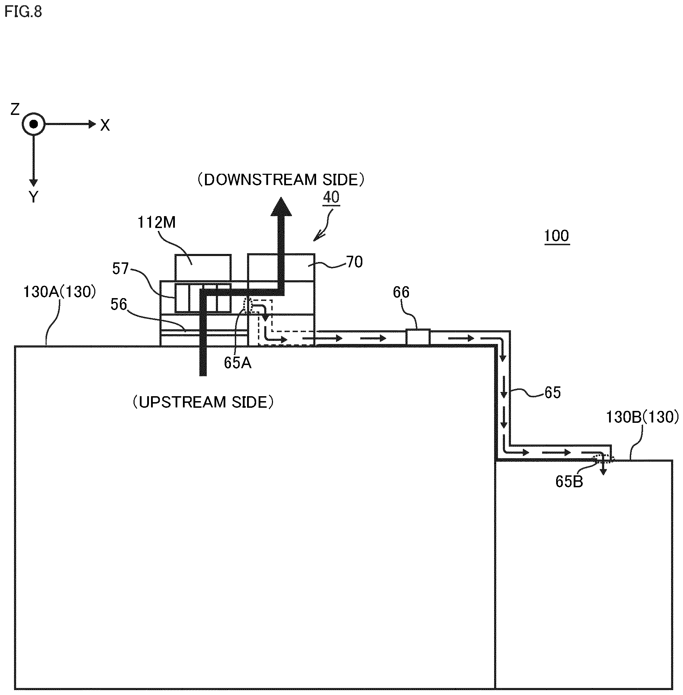

Next, the following describes a first variation of the manner of coupling the drain 65 with reference to FIG. 8. FIG. 8 is a diagram showing another example of the manner of coupling the drain 65 between the mist collector 40 and the body 130.

In the above-described example shown in FIG. 7, the air inlet 65A of the drain 65 is coupled to the mist collector 40, and the air outlet 65B of the drain 65 is coupled to the cover body 130A. In contrast, in this variation, the air inlet 65A of the drain 65 is coupled to the mist collector 40, and the air outlet 65B of the drain 65 is coupled to the coolant tank 130B. With this configuration, minute substances sucked from the mist collector 40 are returned into the coolant tank 130B via the drain 65.

### H. Second Variation of Drain 65

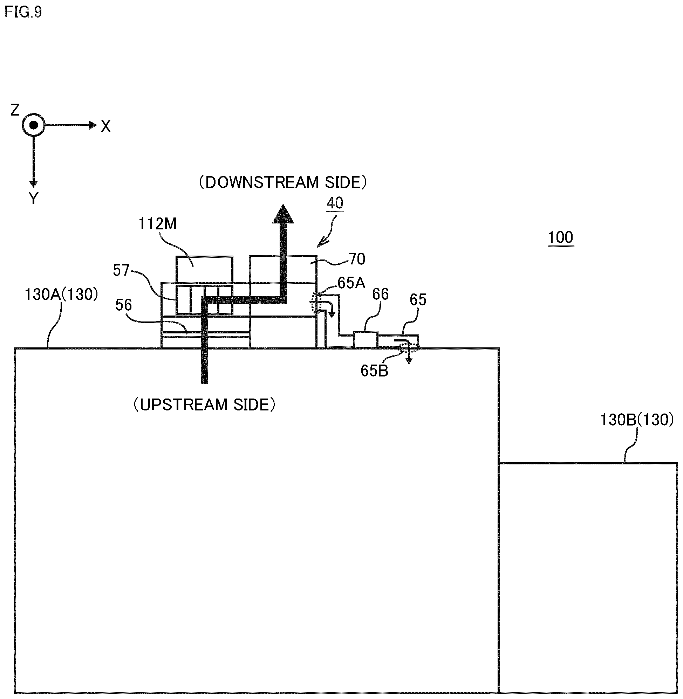

Next, the following describes a second variation of the manner of coupling the drain 65 with reference to FIG. 9. FIG. 9 is a diagram showing another example of the manner of coupling the drain 65 between the mist collector 40 and the body 130.

In the above-described example shown in FIG. 7, the air inlet 65A of the drain 65 is coupled to the mist collector 40 in such a manner as to discharge minute substances that have passed through the rotary filter 56 to the body 130, before the minute substances reach the fan 57. Also, the air outlet 65B of the drain 65 is coupled to the cover body 130A.

In contrast, in this variation, the air inlet 65A of the drain 65 is coupled to the mist collector 40 in such a manner as to discharge minute substances that have passed through the fan 57 to the body 130, before the minute substances reach the multilayer filter 70. In other words, the air inlet 65A of the drain 65 is coupled to a position that is downstream of the fan 57 in the direction of a flow of air passing through the fan 57 and upstream of the multilayer filter 70 in the direction of a flow of air passing through the multilayer filter 70. Also, the air outlet 65B of the drain 65 is coupled to the cover body 130A.

With this configuration, minute substances that have passed through the rotary filter 56 and the fan 57 are sucked into the drain 65 before reaching the multilayer filter 70, and returned into the cover body 130A.

### I. Third Variation of Drain 65

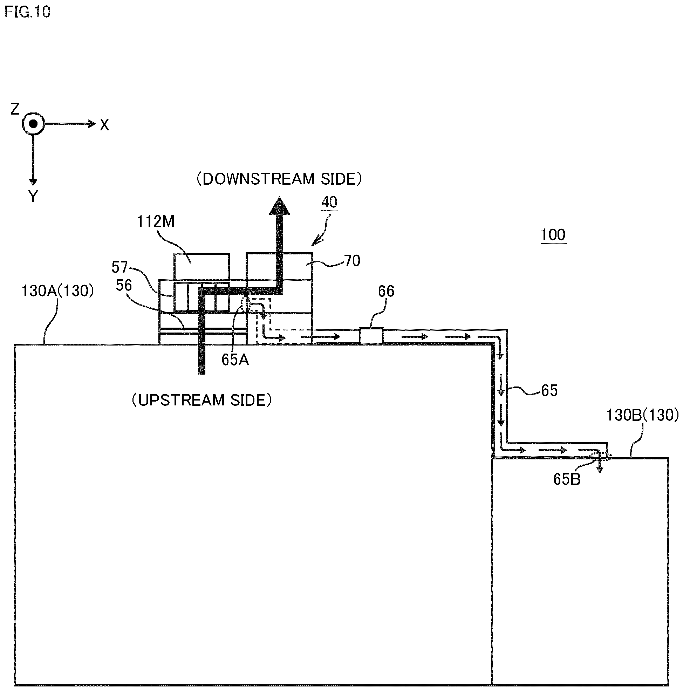

Next, the following describes a third variation of the manner of coupling the drain 65 with reference to FIG. 10. FIG. 10 is a diagram showing another example of the manner of coupling the drain 65 between the mist collector 40 and the body 130.

In the above-described example shown in FIG. 7, the air inlet 65A of the drain 65 is coupled to the mist collector 40 in such a manner as to discharge minute substances that have passed through the rotary filter 56 to the body 130, before the minute substances reach the fan 57. Also, the air outlet 65B of the drain 65 is coupled to the cover body 130A.

In contrast, in this variation, the air inlet 65A of the drain 65 is coupled to the mist collector 40 in such a manner as to discharge minute substances that have passed through the fan 57 to the body 130, before the minute substances reach the multilayer filter 70. In other words, the air inlet 65A of the drain 65 is coupled to a position that is downstream of the fan 57 in the direction of a flow of air passing through the fan 57 and upstream of the multilayer filter 70 in the direction of a flow of air passing through the multilayer filter 70. Also, the air outlet 65B of the drain 65 is coupled to the coolant tank 130B.

With this configuration, minute substances that have passed through the rotary filter 56 and the fan 57 are sucked into the drain 65 before reaching the multilayer filter 70, and returned into the coolant tank 130B.

### J. Timing of Suction by Suction Mechanism 66

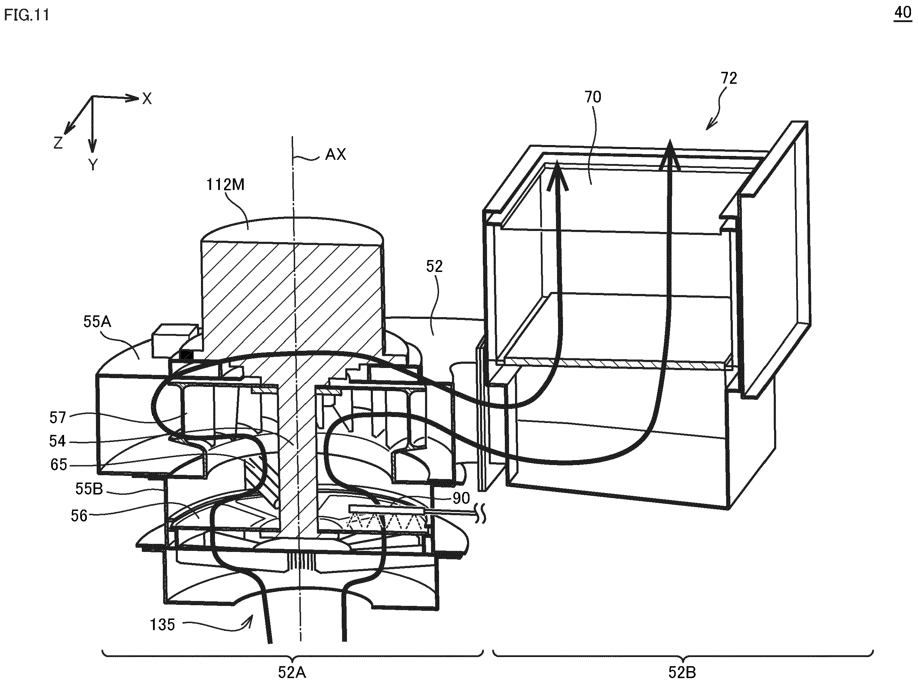

Next, the following describes the above-described suction mechanism 66 with reference to FIG. 11. FIG. 11 is a diagram showing a cross section of the mist collector 40 shown in FIG. 1.

The mist collector 40 shown in FIG. 11 differs from the mist collector 40 shown in FIG. 6 in that the mist collector 40 shown in FIG. 11 further includes a washing mechanism 90. Configurations other than the washing mechanism 90 are the same as those in the mist collector 40 shown in FIG. 6, and redundant descriptions of those configurations are omitted.

The washing mechanism 90 is a mechanism for washing the rotary filter 56. The washing mechanism 90 is fixed to the housing 52 of the mist collector 40.

The washing mechanism 90 is disposed inside the tubular portion 55B. The washing mechanism 90 is between the rotary filter 56 and the fan 57 in the direction of the axis AX. In other words, the washing mechanism 90 is downstream of the rotary filter 56 in the direction of a flow of air passing through the rotary filter 56 and upstream of the fan 57 in the direction of a flow of air passing through the fan 57.

The washing mechanism 90 includes an ejection port for the coolant. The washing mechanism 90 is disposed in such a manner that the ejection port faces the rotary filter 56. The coolant is supplied from the above-described coolant tank 130B, for example. The coolant supplied to the washing mechanism 90 is ejected through the ejection port toward the rotary filter 56. Thus, the washing mechanism 90 removes foreign matters attaching to a downstream side of the rotary filter 56 from an upstream side of the rotary filter 56. The removed foreign matters are returned into the body 130 of the machine tool 100 via the opening 135.

Note that the fluid ejected from the washing mechanism 90 is not limited to the coolant, and may also be air, for example.

The washing mechanism 90 is controlled by the above-described control unit 50. For example, the washing mechanism 90 is controlled by the above-described CPU unit 20. The CPU unit 20 switches ejection of the coolant from the washing mechanism 90 ON and OFF and controls the amount of coolant ejected from the washing mechanism 90 in accordance with the PLC program, for example.

The control unit 50 executes suction processing performed by the above-described suction mechanism 66 while executing washing processing of washing the rotary filter 56 by the washing mechanism 90. Accordingly, the suction mechanism 66 can suck not only minute substances that have passed through the rotary filter 56 but also mist generated as a result of the coolant being ejected from the washing mechanism 90.

### K. Control Flow

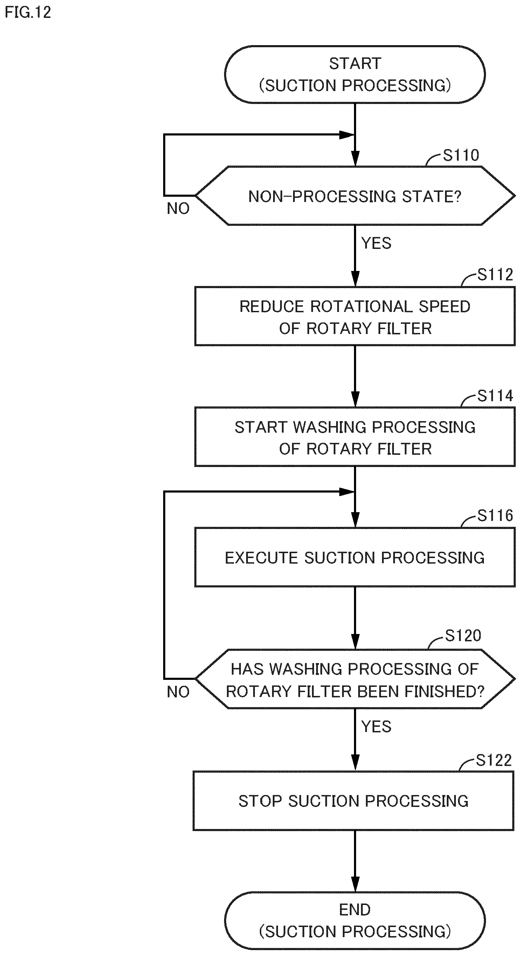

Next, the following describes a control flow of the above-described suction mechanism 66 with reference to FIG. 12. FIG. 12 is a flowchart showing a part of processing executed by the control unit 50 of the machine tool 100.

The processing shown in FIG. 12 is realized as a result of the control unit 50 executing a control program. In another aspect, a part or all of the processing may be executed by a circuit element or another hardware.

In step S110, the control unit 50 determines whether or not the machine tool 100 has transitioned from a processing state to a non-processing state. Whether or not the machine tool 100 has transitioned from the processing state to the non-processing state is determined using various methods. For example, the control unit 50 determines that the machine tool 100 has transitioned from the processing state to the non-processing state based on the fact that execution of the last line in the processing program has been completed. Alternatively, the control unit 50 determines that the machine tool 100 has transitioned from the processing state to the non-processing state based on the fact that the spindle 132 has stopped rotating. It is possible to use an acceleration sensor provided in the spindle 132 to determine that the spindle 132 has stopped rotating, for example. Upon determining that the machine tool 100 has transitioned from the processing state to the non-processing state (YES in step S110), the control unit 50 switches control to step S112. Otherwise (NO in step S110), the control unit 50 again executes the processing in step S110.

In step S112, the control unit 50 controls the above-described motor driver 111M to make the rotational speed of the rotary filter 56 lower than that when the machine tool 100 is in the processing state.

In step S114, the control unit 50 outputs a coolant ejection start instruction to the above-described washing mechanism 90. As a result, the coolant is ejected from the washing mechanism 90 and the rotary filter 56 is washed.

In step S116, the control unit 50 outputs a suction start instruction to the above-described suction mechanism 66. As a result, the suction mechanism 66 starts the suction processing of sucking minute substances and sucks minute substances from the mist collector 40 into the drain 65.

In step S120, the control unit 50 determines whether or not the washing processing performed by the washing mechanism 90 has been finished. For example, the control unit 50 ends the washing processing performed by the washing mechanism 90 when a period of time determined in advance has elapsed from the start of the washing processing performed by the washing mechanism 90. Upon determining that the washing processing performed by the washing mechanism 90 has been finished (YES in step S120), the control unit 50 switches control to step S122. Otherwise (NO in step S120), the control unit 50 again returns to step S116.

In step S122, the control unit 50 outputs a suction stop instruction to the above-described suction mechanism 66. As a result, the suction mechanism 66 stops the suction processing of sucking minute substances. Note that the suction stop instruction may be output immediately after the washing processing performed by the washing mechanism 90 is finished or after a predetermined period of time has elapsed from the end of the washing processing performed by the washing mechanism 90.

### L. Variation of Mist Collector 40

Next, the following describes a variation of the mist collector 40.

The mist collector 40 shown in FIG. 6 described above is a horizontal mist collector 40 in which the rotary filter 56 and the fan 57 are parallel to a horizontal plane, but the mist collector 40 is not limited to the horizontal mist collector 40. The mist collector 40 may also be a vertical mist collector 40. In this case, the mist collector 40 is disposed in such a manner that the rotary filter 56 and the fan 57 are orthogonal to the horizontal plane.

In this case, the air inlet 65A of the drain 65 is coupled to a bottom surface in the housing 52 between the rotary filter 56 and the fan 57. Alternatively, the air inlet 65A of the drain 65 may be coupled to a bottom surface in the housing 52 between the fan 57 and the multilayer filter 70.

### M. Summary

As described above, the mist collector 40 includes: the drain 65 for discharging minute substances that have passed through the rotary filter 56 to the body 130; and the suction mechanism 66 for sucking the minute substances from the mist collector 40 into the drain 65. With this configuration, the mist collector 40 can discharge minute substances that have passed through the rotary filter 56 from the mist collector 40 via the drain 65.

The disclosed embodiment is an illustrative example in all aspects and should not be considered as restrictive. The scope of the present invention is defined not by the above descriptions but by the claims, and is intended to encompass all modifications within the meanings and scope that are equivalent to the claims.

### List of Reference Numerals

- 10: Filtration mechanism
- 11: Coolant bath
- 20: CPU unit
- 30: CNC unit
- 40: Mist collector
- 50: Control unit
- 52: Housing
- 52A: First filtering area
- 52B: Second filtering area
- 54: Shaft
- 55A: Tubular portion
- 55B: Tubular portion
- 56: Rotary filter
- 57: Fan
- 65: Drain
- 65A: Air inlet
- 65B: Air outlet
- 66: Suction mechanism
- 70: Multilayer filter
- 72: Exhaust port
- 90: Washing mechanism
- 100: Machine tool
- 109: Pump
- 110: Valve
- 111A: Motor driver
- 111M: Motor driver
- 111R: Motor driver
- 111X: Motor driver
- 111Y: Motor driver
- 111Z: Motor driver
- 112A: Motor
- 112M: Motor
- 112R: Motor
- 112X: Motor
- 112Y: Motor
- 112Z: Motor
- 113: Movable body
- 125: Ejection part
- 125A: Ejection mechanism
- 125B: Ejection mechanism
- 125C: Ejection mechanism
- 130: Body
- 130A: Cover body
- 130B: Coolant tank
- 131: Spindle head
- 132: Spindle
- 133: Housing
- 134: Tool
- 135: Opening
- 136: Table
- 150: Collection mechanism
- 151: Liquid level sensor
- 152: Pump

## Claims

1. A machine tool comprising:
a body including a processing area for a workpiece;
an ejection part configured to eject a coolant into the processing area; and
a mist collector configured to suck a substance included in air as a result of the coolant being ejected from the ejection part into the processing area,
wherein the mist collector includes a first filter for removing the substance, and
the machine tool further comprises:
a drain configured to discharge the substance that has passed through the first filter to the body; and
a suction mechanism configured to suck the substance that has passed through the first filter from the mist collector into the drain.

2. The machine tool according to claim 1,
wherein the body includes a cover body defining the processing area,
one end of the drain is coupled to the mist collector, and
another end of the drain is coupled to the cover body.

3. The machine tool according to claim 1,
wherein the body includes:
a cover body defining the processing area;
a collection mechanism configured to collect the coolant ejected from the ejection part into the processing area; and
a coolant tank configured to store the coolant collected by the collection mechanism,
one end of the drain is coupled to the mist collector, and
another end of the drain is coupled to the coolant tank.

4. The machine tool according to claim 2 or 3,
wherein the mist collector includes:
a fan configured to create a flow of air from the body toward the mist collector; and
a second filter including a plurality of layers and fixed inside the mist collector,
the substance sucked from the body into the mist collector passes through the first filter, the fan, and the second filter in this order, and
the one end of the drain is coupled to the mist collector in such a manner as to discharge the substance that has passed through the first filter to the body, before the substance reaches the fan.

5. The machine tool according to claim 2 or 3,
wherein the mist collector includes:
a fan configured to create a flow of air to carry the substance within the body from the body to the mist collector with the flow of air; and
a second filter including a plurality of layers and fixed inside the mist collector,
the substance sucked from the body into the mist collector passes through the first filter, the fan, and the second filter in this order, and
the one end of the drain is coupled to the mist collector in such a manner as to discharge the substance that has passed through the fan to the body, before the substance reaches the second filter.

6. The machine tool according to any one of claims 1 to 5,
wherein the first filter is a rotary filter configured to be rotatable,
the machine tool further comprises:
a washing mechanism configured to wash the rotary filter; and
a control unit configured to control the machine tool, and
the control unit executes suction processing performed by the suction mechanism while executing washing processing of washing the rotary filter by the washing mechanism.
